# EUROPEAN PATENT APPLICATION

(11) **EP 1 864 950 A1**
(43) Date of publication of application: **12.12.2007**
(21) Application number: 07107721.8
(22) Date of filing: 08.05.2007
(51) Int. Cl.: C03B 33/02, C03B 33/07, B23K 26/36

(54) **Process and equipment for the preparation of sheets of glass for multiple glazing having at least one coated sheet of glass**

(30) Priority: 09.06.2006 IT TO20060417
(71) Applicant: BIESSE S.p.A., 61100 Pesaro (IT)
(72) Inventor: Antonelli, Simone, 61100, Pesaro (IT); Belli, Marco, 61100, Saltara (Pesaro Urbino) (IT)
(74) Representative: Notaro, Giancarlo

(57) **Abstract**

Described herein is a process for the preparation of sheets of glass (V1-V10) for multiple glazing having at least one coated sheet of glass, in which the aforesaid sheets of glass (V1-V10) are obtained by cutting from a single starting sheet (V), having at least one coated face, by means of three successive steps. In a first step, a treatment is carried out on the coating along a boundary of division of the sheets of glass to be obtained. In a second step, an incision is made along said boundary of division. In a third step, separation of the sheets of glass is carried out along the aforesaid incised boundary. The aforesaid treatment of the coating is carried out by laser beam.

## Description

The present invention relates to processes and equipment for the preparation of sheets of glass for multiple glazing having at least one coated sheet of glass.

With the expression "multiple glazing" it is intended herein to refer to glazed frames that also generally go by the name of "double glazing" and typically comprise a pair of parallel sheets of glass set at a distance apart and joined, along their peripheral boundary, to a supporting frame that also has the function of isolating the space comprised between the two sheets of glass with respect to the outside. Frequently, at least one of the two sheets of glass constituting the multiple glazing is coated with a low-transmittance film, in order to reduce the solar radiation capable of traversing the window pane. Said coating must be removed along the peripheral margin of the pane of glass, where the sheet of glass is to be glued to the supporting frame.

There are already known and have been used for some time now different processes and devices capable of carrying out the aforesaid operation.

In particular, known from the document No. EP-A-0 517 176 is a process for the preparation of sheets of glass for the production of multiple glazing having at least one coated sheet of glass, in which said sheets of glass are obtained by being cut from a single starting sheet, having one of its faces coated, by means of three successive steps: a first step, in which a treatment is carried out on the coating of the starting sheet along the boundary of division of the sheets of glass to be obtained; a second step, in which an incision is made along said boundary of division; and a third step of separation of the various sheets of glass along the aforesaid incised boundary.

In the case of the solution known from EP-A-0 517 176, the step of treatment of the coating is carried out by removing the coating locally using mechanical abrasive devices. According to what is indicated in the aforesaid document, said technique presents the advantage of enabling execution of removal even along curvilinear paths and before execution of the step of cutting of the panes of glass, in contrast with other known techniques, in which, for example, the removal of the coating is carried out with the aid of a gas burner or by means of sanding. The process known from EP-A-0 517 176 would moreover present the advantage of a reduced interaction of the process itself with the sheet of glass as compared to the other known techniques mentioned above.

The removal of the coating with mechanical abrasive devices is not, however, free from drawbacks. For example, in the areas where the removal of the coating is carried out, it is possible to have deposits of dust resulting from abrasion and residue of coating or of glass that has not been removed (even though it is possible to resort to a suction system). This involves the presence of more or less extensive areas in which the adhesive/sealant is not able to guarantee in an optimal way constant adhesion and/or sealing over time. Furthermore, removal by means of a mechanical abrasive device causes irregularities on the glass, where the characteristics of adhesion and/or sealing of the sealant/adhesive are not guaranteed either. The presence of roughness on the surface can also lead to a reduction of the duration of the multiple glazing in terms of resistance to climatic agents. In particular, in the presence of humidity, particles of water can more easily penetrate into the voids left between the roughnesses and the sealant. In theory, the formation of irregularities on the surface of the glass could be prevented with an automatic control capable of dosing the pressure with which the mechanical abrasive device exerts pressure on the sheet of glass, but this is a source of complications and higher costs.

A further drawback of the known process described above lies in the fact that the coating must be removed along the peripheral edge of the starting sheet for a width substantially equal to half the width of removal along the lines of division within the starting sheet that separate from one another the panes of glass to be obtained. For example, typically the film is removed for a width of 10 mm along the peripheral edge of the starting sheet, and for a width of 20 mm along the lines of division within the pane of glass, so that each pane of glass that is then obtained by means of cutting from the starting sheet has an area along its peripheral edge, in which the coating is removed, having a width of 10 mm. In the case where the removal is carried out by means of a tangential abrasive wheel, i.e., one rotating about an axis kept parallel to the plane of the pane of glass, a grinding wheel is chosen with a peripheral edge having an axial dimension of 20 mm, in such a way as to be able to carry out removal of the coating along a strip of equal width in an area corresponding to the lines of division within the starting sheet. In the case where the same grinding wheel is also used for removal of the coating along the peripheral edge of the starting sheet of glass, it is positioned so as to come into contact with the sheet of glass only for half of its axial dimension, a fact that obviously with time generates a non-uniform wear of the grinding wheel. Said drawback in some cases imposes the need to equip the machine with an operating assembly provided with at least two grinding wheels of different width and to change the grinding wheel according to the width to be removed (see DE-U-29 615 085 and DE-19 632 240 C2). In some cases a front-acting abrasive device is used (see the Italian patent application No. VI2004/A000145), but also in this way there remain in any case the problems as regards obtaining an irregular surface, and there is moreover introduced the drawback of a consumption of the abrasive material that is much more rapid than in the case of a tangentially acting tool.

The purpose of the present invention is to solve all the aforesaid drawbacks by proposing a process and equipment for the preparation of sheets of glass for multiple glazing, whereby sheets of glass prearranged for gluing can be obtained in the cutting station itself and without the problems mentioned above linked to processing with an abrasive tool, and finally also with a higher end quality of the treated edges of the panes of glass.

With a view to achieving said purpose, the subject of the present invention is a process for the preparation of sheets of glass for multiple glazing, having at least one coated sheet of glass according to claim 1.

In a first embodiment, the laser beam is prearranged in such a way as to bring about a vaporization or ablation of the coating, by bringing back onto the surface in the area irradiated the original glass substrate, on which the adhesion of the sealant in the fabrication of the multiple glazing is effective.

In a second embodiment, the laser beam is prearranged in such a way as to create, on the coating, a heating, with consequent reflowing or phase change of the material of the coating, in such a way that the coating thus treated enables adhesion of the sealant in the fabrication of the multiple glazing.

The energy of the laser beam is adjusted in such a way as to optimize the thermal action on the coating, without any secondary effect of heating of the glass substrate or of the material forming the support for the sheet of glass. In this way, the area of transition between the irradiated area and the non-irradiated coated area is homogeneous.

The thermal effect of the laser beam can be modified by acting on the parameters of the laser source so as to focus an amount of energy sufficient to guarantee optimal results of adhesion of the surfaces, also according to the characteristics of the coating and the number of superimposed layers of coating.

In the preferred of embodiment of the invention, the laser device is integrated on board a machine for the incision and shearing of sheets of plane or laminated glass. In particular, the laser device can be integrated in a mobile head at least in two mutually orthogonal horizontal directions on a cutting bench. The laser device can be adjusted so as to cover any desired width in the direction of movement, with the aid of a scanning device, which imparts an oscillation upon the laser beam during movement of the head. In this way, it is possible to carry out treatment of the coating for any width that may be necessary in each area of the pane of glass. The movements of the device are preferably controlled as desired by an electronic programmable control system to obtain predetermined widths of treatment, for example 10 mm along the peripheral edge from the starting sheet and 20 mm along the lines of internal division, or also other special widths comprised in the working range of the scanning head. In this way, the problem of a generic or differentiated wear of the tool is radically eliminated. Furthermore, the duration of the laser device is longer than that of an abrasion tool, and the operations of maintenance are more limited.

The aforesaid advantages are added to those deriving from the integration of the device on a cutting machine, in itself known from EP-A-0 517 176, and in particular to the advantage of carrying out the treatment on the coating before the division of the panes of glass, with consequent reduction in handling operations and increase in precision, as well as to the advantage of an adjustment of the rate of treatment, to the advantage of being able to carry out curvilinear paths and to enable containment of the entire process in a single processing station, by means of one and the same program for controlling the mobile head on the cutting bench, and with consequent advantages of reduction of overall dimensions and costs.

Further preferred and advantageous characteristics of the invention are specified in the annexed dependent claims.

The invention will now be described with reference to the annexed plate of drawings, which is provided purely by way of non-limiting example and in which:
- Figure 1 is a partial cross-sectional view, in a vertical plane, of equipment according to the invention;
- Figure 2 illustrates the working principle of the equipment of the invention with reference to the possibility of obtaining a qualitative improvement in the removal of the coating by modifying the inclination of the laser beam in such a way as to prevent any possible residue from depositing where passage of the laser beam has already occurred;
- Figure 3 illustrates in a plan view two examples of geometry of removal obtainable through the movements of a laser scanning head combined with those along two mutually orthogonal horizontal axes normally used in the incision of the plane or laminated glass;
- Figure 4 is a schematic illustration of equipment according to the invention;
- Figure 5 is a schematic plan view of the starting sheet of glass, on which the paths of treatment by coating made before the operation of cutting are shown;
- Figure 6 is a schematic plan view of a variant of the equipment of Figure 4, where two different mobile bridges are provided on the cutting bench, one carrying an incision head, and the other carrying the laser head; and
- Figure 7 is a schematic plan view of three different applications of the laser head on one and the same bridge of a cutting machine.

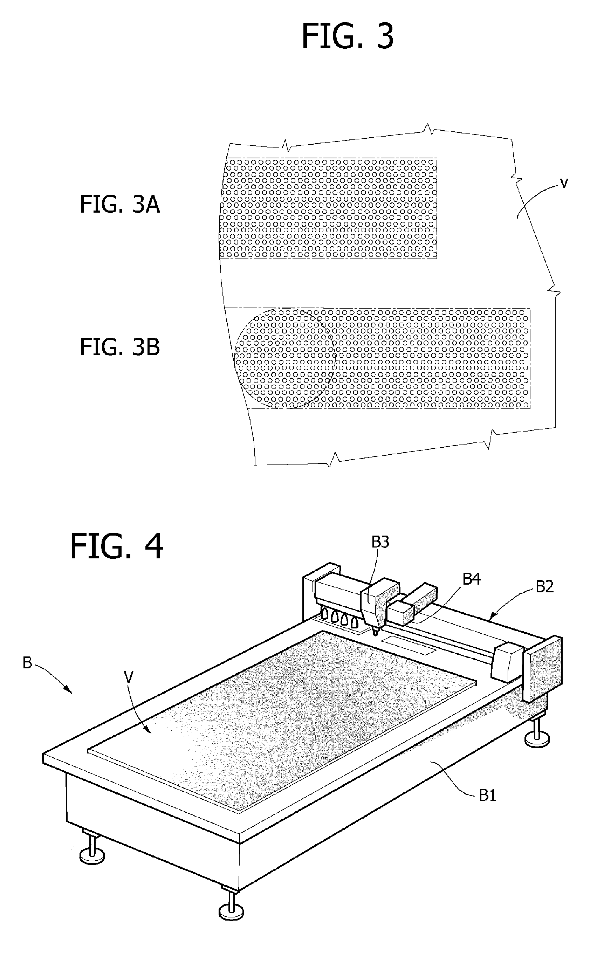

With reference to Figure 4, the reference B designates as a whole equipment according to a possible embodiment of the present invention, which corresponds to a large extent to that of a normal machine for cutting plane glass, comprising a bench B1, on which the sheet of glass V to be processed is rested. Set horizontally mobile on the bench B1 is a bridge B2, the ends of which are mobile on guides (not illustrated), provided on the bench B1. Mounted slidably on the bridge B2 are both an incision head B3 and a laser head B4.

The details of construction of the cutting bench B1, as well as of the head B3 are not described or illustrated herein, in so far as they can be made in any known way and do not fall, taken in themselves, within the scope of the present invention. Furthermore, elimination of said details from the drawings renders the latter more readily and easily understandable.

The movements of the bridge B2 in the horizontal longitudinal direction of the cutting bench, and of the heads B3, B4 in the horizontal direction perpendicular thereto, along the bridge B2, are controlled by motor-drive means of any type (not illustrated) and by corresponding systems of transmission (not illustrated) that can also be made in any known way. Furthermore, said motor-drive means are controlled by a programmable electronic control unit so as to enable carrying-out both of the operation of treatment of the coating of the sheet of glass V, and of the operation of incision, along any predetermined path.

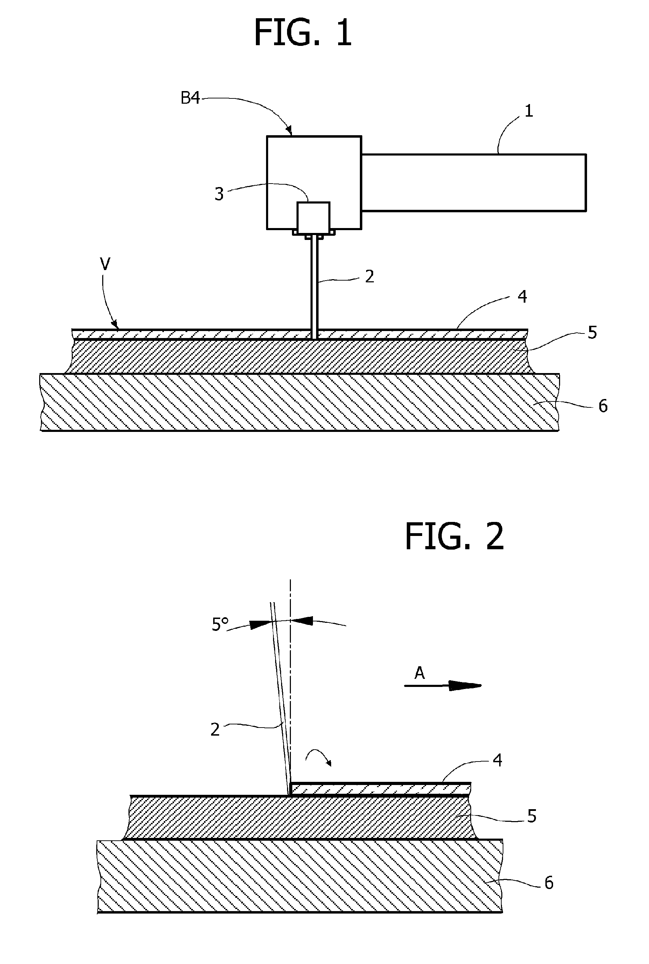

With reference to Figure 1, the laser head B4 is connected to a laser source 1 of any known type and comprises a focusing head 3 equipped, in a way in itself known, with optical and/or mechanical means for imparting a movement of oscillation upon the laser beam 2 leaving the focusing head 3. Consequently, for one and the same position of the head B4 with respect to the sheet of glass V, the laser beam 2 can carry out a movement of scanning with respect to the pane of glass V. The pane of glass V comprises a substrate 5 provided with a layer of coating 4, on which the laser beam is focused.

As already referred to above, the head B4 is moved over the sheet of glass V along the two mutually orthogonal horizontal axes, thanks to the movements of the bridge B2 with respect to the bench B1, and of the head B4 along the bridge B2. Said movements, combined with the possibility of oscillation of the laser beam 2, generated by the scanning head 3, enable execution of the treatment on the coating along both rectilinear and curvilinear paths on the entire coated surface of the sheet of glass V and for a variable width of treatment as desired. As has already been said, the process is carried out with parameters such as not to cause any heating of the glass or damage to the material 6 on which the sheet of glass 5 is rested.

The laser device used can be constituted by a solid-state laser source of an Nd-YAG or Nd-YV04 type, preferably of a diode pulsed type, with a wavelength comprised between 500 nm and 1100 nm. Wavelengths of around 1064 nm are preferable because they enable an excellent absorption by the coating and a low absorption by the glass. The action of irradiation of the coating can be exerted by exposing the coating directly to the beam or also by causing the beam to pass through the substrate. In the latter case, cleanliness is certainly better since the particles of the coating are vaporized or in any case expelled from outside thereof. However, in the machine for cutting of a single sheet of glass, without interposition of the safety adhesive it is not possible to rest the glass on the coated side since some coatings are very delicate. Direct irradiation yields, however, an equivalent result as regards preparation of multiple glazing. After exposure, the glass does not re-establish completely the original optical qualities, but a clean surface is obtained in any case for application of the sealant. In cutting of laminated glass, the architecture of the machine, which has cutting devices above and underneath the plane of the glass would also enable housing of the laser underneath the plane of the glass for carrying out irradiation, if necessary, on the side opposite to the coating.

Exposure of the coating to the energetic action of the laser can be adjusted by acting on the focal lengths, the power, and the optics of generation of the pulse so as to obtain different effects. It is possible to obtain total removal of the coating on the entire diameter of the spot, with a minimum perimetral area in which the coating is remelted, modifying its structure with a phase change. At the minimum value of adjustment of energy produced, it is possible to obtain also a reflowing with phase change of the coating over the entire area of action of the beam in the case where said reflowing is already in itself sufficient to guarantee adhesion of the sealant on the multiple glazing.

In order to obtain optimal quality of the removal and prevent also a minimum heating of the resting material 6, pulse times of the order of a few tens of nanoseconds can be used. However, to obtain a pulse time in this region it is necessary to resort to "Q-switch" devices of an electro-optical type or even very precise and costly acoustical-optical devices, to which the entire constructional architecture of the apparatus must be dedicated. Common Q-switch devices can provide pulse times comprised between 80 and 200 ns that can locally cause at the passage of the beam a rise in the temperature of the material 6, without, however, causing even localized burning thereof. Also the aesthetic quality of the removal is not sensibly affected by setting on the highest pulse times.

The scanning head 3 of the apparatus enables movements of the beam to be made in order to traverse, with, for example, an alternated or circular motion, a width adjustable up to at least 20 mm, to enable the treatment to be carried out on a surface sufficient for application of the sealant on the edges after separation of the panes of glass. Once the treatment is completed, the cutting tool is brought, along the same boundary, through the median line of the treated strips. The rate of the treatment can vary according to whether the aim is to carry out a complete cleaning of the coating from the substrate or else a diffused reflowing of the coating sufficient to bring about adhesion of the treated part to the sealant.

For a better quality of the treatment it is also possible to incline the laser beam slightly with respect to the vertical on the side opposite to the direction A of advance along the pane of glass, as illustrated in Figure 2. In this way, the evaporated particles are prevented from re-condensing on the treated area, said particles being able at most to redeposit on the area still to be treated. Excessive opening of the angle of inclination leads, however, to a loss of energy on the spot and hence an insufficient treatment. Consequently, a good compromise between the absence of residue and good quality of the treatment is achieved when said angle is comprised between 0° and 5°.

To obtain the desired rate of advance of the treatment it is possible to move the optics of the scanning head so as to create geometries of rapid advance consisting in an alternating movement along the width combined with advance of the axis of the machine (raster movement) or a circular movement always combined with the advance of the axis of the machine (wobble movement). Said geometries are obtained on the glass as in Figures 3A and 3B, respectively. The distribution of the energy of a pulsed laser is a gaussian distribution. Said shape represents the nature of the energy supplied, which is very high at the centre and decreases towards the margins of the beam. This shape is obtained typically when the laser is used in combination with spherical optics and is applicable in the area of lithography, incision and marking. For applications of cleaning or thermal treatment, as in the case of the present invention, it is useful to have a uniform energy distribution over the entire area of the beam (flat profile of the energy distribution). Such a profile can be obtained through the use of a beam homogenizer. This instrument enables a considerable increase of flexibility in the formation of the appropriate profile for treating the coating in an adequate manner without damaging the glass substrate and for rendering the treatment uniform over the entire area involved in the exposure. Furthermore, a flat energy profile enables the use of cylindrical lenses on the final focusing in order to achieve an even more uniform distribution.

The system according to the invention preferably comprises means (not illustrated) for supplying a jet of gas under pressure in the treatment area and for aspirating the fumes in the treatment area, according to a technique in itself known in the field of laser treatments. As already referred to above, the device constituted by the laser source 1 and by the scanning head 3 can be prearranged on the cutting bridge B2 of a machine for cutting of plane glass, as may be seen in Figure 4, already discussed above. To limit the stresses due to acceleration of the machine, it is also possible to house just the scanning head 3 fixed with respect to the cutting head, keeping the source 1 immobile and conveying the laser beam from the fixed apparatus to the mobile one by optical-fibre means. The laser device can have a mechanical system for adjustment of the height with respect to the glass, to enable the same distribution of energy due to the focusing set to be maintained, irrespective of the thickness of the glass.

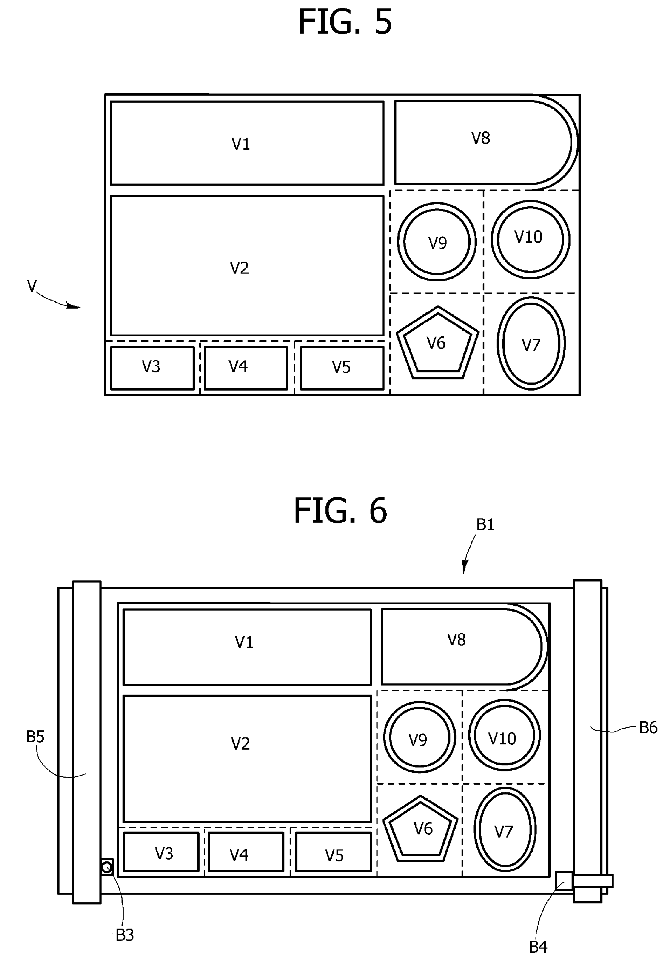

Illustrated in Figure 6 is a variant in which the cutting device and the laser device are associated to two different bridges B5, B6 so as to render the two processes altogether independent and enable preparation of the coated sheets of glass separately from the non-coated ones.

The arrangement of Figure 6 renders moreover possible prevention of movement of the laser head during the process of cutting. During the laser treatment the two bridges are coupled together. At the end of treatment, the laser bridge is deposited in a station, and the cutting bridge proceeds with the cutting tool at the customary rate of cutting. In this way, the control of the two bridges is single.

As already described above, Figure 5 illustrates an example of arrangement of the areas of treatment on the sheet of glass. As may be seen, the peripheral areas on the starting sheet have a width of treatment that is approximately half the width of the areas of treatment along the lines of division within the pane of glass so that, after execution of the treatment and after the subsequent step of incision and separation, each of the panes of glass V1-V10 that will be obtained will have, along its entire peripheral edge, a treated area of uniform width, corresponding to the one visible in Figure 5 along the peripheral edge of the starting sheet of glass.

The details of implementation of the solution with two bridges illustrated in Figure 6 are not described herein in so far as they can be of any known kind. In particular, they can be similar to what is illustrated in the solution known from EP-A-0 517 176, where the two bridges carry, one a cutting head and the other a head for the mechanical process of abrasion.

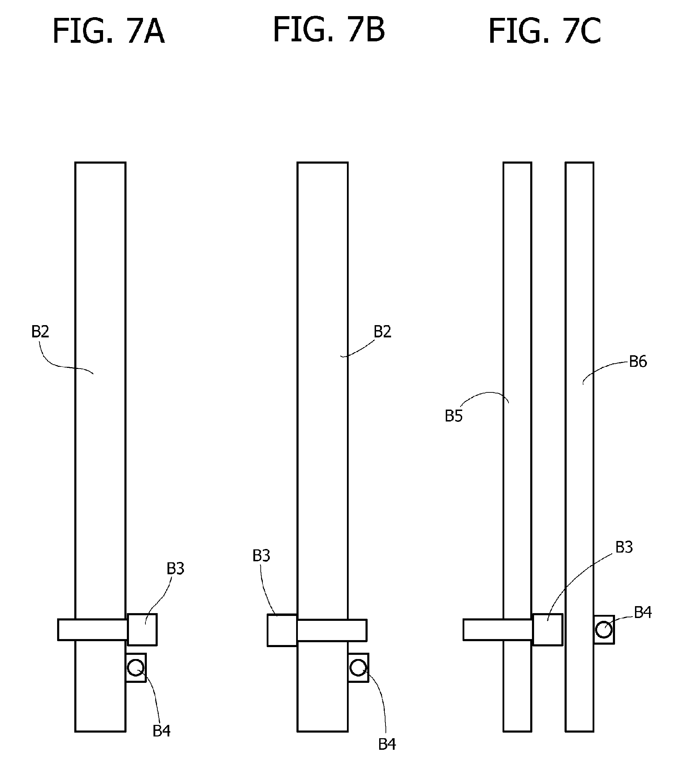

Figure 7 illustrates, instead, three different embodiments of a single bridge equipped both with a cutting head and with a laser head. The three solutions illustrated differ from one another as regards the relative positioning of the two heads (on the same side, on opposite sides, or else with the laser head housed on a structure of its own fixed with respect to the cutting head).

Also the constructional details of the solution with single bridge can in any case be of any known kind, for example as illustrated in the corresponding solution known from EP-A-0 517 176.

It is also possible to envisage the arrangement in separate stations of the cutting device and of the laser device, in which case the pane of glass is first subjected to treatment and subsequently re-positioned and cut.

The width of action of the laser beam can be adjusted to 10 mm in the case where it is intended to prepare panes of glass with just the marginal area irradiated, in which case cutting is carried out on the left-hand edge or else on the right-hand edge of the area irradiated.

Of course, without prejudice to the principle of the invention, the details of construction and the embodiments may vary widely with respect to what is described and illustrated herein purely by way of example, without thereby departing from the scope of the present invention.

For example, even though all the embodiments illustrated herein envisage a horizontal positioning of the sheet of glass, there is not ruled out either a system similar to what is described herein, which envisages, however, a positioning of the sheet of glass in a substantially vertical plane, or in a plane slightly inclined with respect to the vertical.

## Claims

1. A process for the preparation of sheets of glass (V1-V10) for the production of multiple glazing having at least one coated sheet of glass, in which said sheets of glass (V1-V10) are obtained by cutting from a single starting sheet (V) having at least one coated face, by means of three successive steps: a first step, in which a treatment is carried out on the coating along a boundary of division of the sheets of glass (V1-V10) to be obtained; a second step, in which an incision is made along said boundary of division; and a third step, in which a separation of the sheets of glass (V₁-V₁₀) is performed along the aforesaid incised boundary,
said process being **characterized in that** the aforesaid treatment of the coating (4) is carried out by means of laser beam which is sent by a focusing head equipped with means for orienting the laser beam so as to be able to treat a relatively vast area of the coating for one and the same position of the head with respect to the glass.

2. The process according to Claim 1, **characterized in that** the laser beam is prearranged in such a way as to bring about a vaporization or ablation of the coating that brings back to surface in the area irradiated the original glass substrate (5) on which the adhesion of a sealant in the preparation of multiple glazing is effective.

3. The process according to Claim 1, **characterized in that** the laser device is prearranged in such a way as to create on the coating (4) a heating with consequent reflowing or phase change of the material so that the coating (4) thus treated enables adhesion of a sealant in the fabrication of a multiple glazing.

4. The process according to any one of the preceding claims, **characterized in that** the energy of the laser beam on the coating is adjusted to optimize the thermal action on the coating without the secondary effect of a heating of the glass substrate (5) or of the material (6) supporting the sheet of glass (V).

5. The process according to any one of the preceding claims, **characterized in that** the laser is of the Nd-YAG or Nd-YVO 4 type.

6. The process according to any one of the preceding claims, **characterized in that** the laser beam is pulsed, with pulses of duration comprised between 80 and 200 ns.

7. The process according to any one of the preceding claims, **characterized in that** the wavelength of the laser beam is comprised between 500 and 1100 nm.

8. The process according to Claim 7, **characterized in that** the wavelength of the laser beam is approximately 1064 nm.

9. The process according to Claim 7, **characterized in that** the wavelength of the laser beam is approximately 532 nm.

10. The process according to any one of the preceding claims, **characterized in that** the laser beam is directed onto the sheet of glass (V) according to an axis inclined by an angle comprised between 0° and 5°, on the side opposite to the direction of advance (A), with respect to a direction orthogonal to the sheet of glass.

11. The process according to any one of the preceding claims, **characterized in that** the laser beam is directed onto the sheet of glass via an optical system.

12. The process according to Claim 11,
**characterized in that** the optical system includes means optical-fibre means.

13. The process according to Claim 11 or Claim 12, **characterized in that** the laser beam is oriented directly on the coating (4).

14. The process according to Claim 11 or Claim 12, **characterized in that** the laser beam is sent onto the sheet of glass on the side opposite to the face bearing the coating so as to traverse the glass before encountering the coating.

15. The process according to any one of the preceding claims, **characterized in that** a jet of gas under pressure is sent into the treatment area.

16. The process according to any one of the preceding claims, **characterized in that** a system for aspiration of the fumes in the area of the treatment is provided.

17. The process according to any one of the preceding claims, **characterized in that** said means for orienting the laser beam move the laser beam in an alternating movement or in a circular movement, while the head advances.

18. The process according to any one of the preceding claims, in which the sheet of glass is a stratified or laminated sheet of glass, **characterized in that** the laser beam is prearranged in such a way as not to produce appreciable mechanical or thermal effects on the material of joining between the layers of glass.

19. The process according to any one of the preceding claims, **characterized in that** the energy of the laser beam is distributed over a relatively wide surface with the aid of beam homogenizers and/or other diffractive optics.

20. The process according to any one of the preceding claims, **characterized in that** focusing of the laser beam is adjusted according to the thickness of the glass on which the treatment is carried out.

21. The process according to any one of the preceding claims, **characterized in that** along the lines of division within the starting sheet the treatment is carried out on a width twice that of the treatment along the peripheral margin of the starting sheet.

22. The process according to any one of the preceding claims, **characterized in that** the starting sheet of glass is set in a horizontal position.

23. The process according to any one of Claims 1-**22, characterized in that** the starting sheet of glass is prearranged in a vertical position.

24. The process according to Claim **22** or Claim **23, characterized in that** the steps of incision and cutting are carried out along the median lines of the strips in an area corresponding to which the treatment is carried out by means of the laser beam.

25. Equipment for the preparation of sheets of glass for multiple glazing having at least one coated sheet of glass, comprising means for obtaining said sheets of glass (V1-V10) cutting of a single starting sheet (V), having at least one coated face, said means including first means for carrying out a treatment on the coating along a boundary of division of the panes of glass to be obtained (V1-V10), second means for making an incision along said boundary of division, and third means for the subsequent separation along the incised boundary,
said equipment being **characterized in that** said means of treatment comprise a laser device (1, 3) wherein a laser head (3) is equipped with means for the orientation of the laser beam (2) leaving the head (3).

26. The equipment according to Claim **25, characterized in that** the laser device (1, 3) comprises a laser generator (1) connected to a laser head (3) equipped with means for focusing of the laser beam.

27. The equipment according to Claim 25 or Claim 26, **characterized in that** the laser head (3) is mobile at least in two mutually orthogonal directions.

28. The equipment according to any one of Claims **25-27, characterized in that** said means for the orientation of the laser beam are apt to move the laser beam in an alternating movement or in a circular movement, while the head advances.

29. The equipment according to Claim 27, **characterized in that** the structure of the laser generator is mobile with the structure of the laser head (3).

30. The equipment according to Claim **27, characterized in that** the structure of the laser generator is stationary, the laser generator being optically connected to the laser head (3) via optical-fibre means.

31. The equipment according to any one of Claims **25-30, characterized in that** the laser head (3) is equipped with means for adjustment of the laser beam, which include means for adjustment of the focusing length.

32. The equipment according to any one of Claims **25-31, characterized in that** the laser head (3, B4) is slidably mounted on a bridge (B2), which is in turn slidable in a horizontal direction orthogonal to the longitudinal direction of the bridge (B2) on a bench (B1), on which the starting sheet of glass (V) may be positioned.

33. The equipment according to Claim 32, **characterized in that** mobile in two mutually orthogonal horizontal directions on the same bench (B1) is a cutting head (B3), which is also slidably mounted on a mobile bridge (B2) on the bench (B1).

34. The equipment according to Claim **33, characterized in that** the laser head (B4) and the cutting head (B3) are mounted on the same bridge (B2).

35. The equipment according to Claim **34, characterized in that** the laser head (B4) and the cutting head (B3) are set on the same side of said bridge (B2).

36. The equipment according to Claim **34, characterized in that** the laser head (B4) and the cutting head (B3) are set on opposite sides of the common bridge (B2).

37. The equipment according to Claim **33, characterized in that** said laser head (B4) and said cutting head (B3) are mobile on two different bridges (B5, B6), which are in turn mobile on one and the same bench (B1).

38. The equipment according to Claim 33, **characterized in that** the movements of the laser head (B4) and the movements of the cutting head (B3) are controlled by one and the same electronic control unit.

39. The equipment according to Claim 37, **characterized in that** the two different bridges (B5, B6) are provided with coupling means for moving together during the step of laser treatment so as to enable control of the movements of the laser head with the same program for controlling the movements of the cutting head.

40. The equipment according to Claim **39, characterized in that** the two different bridges (B5, B6) are uncoupled to enable the laser head to be left stationary during execution of the operation of cutting.

41. The equipment according to Claim **29, characterized in that** the laser head (B4) is integrated in the cutting head (B3).
